# FASCICULE DE BREVET EUROPEEN

(11) **EP 0 795 377 B1**
(45) Date de publication et mention de la délivrance du brevet: **27.02.2002**
(21) Numéro de dépôt: 97400548.0
(22) Date de dépôt: 13.03.1997
(51) Int. Cl.: B23K 35/02, B23P 6/00

(54) **Procédé de réalisation d'un apport sur une zone localisée de pièce en superalliage**
Verfahren zum Herstellen von Ablagerungen auf lokalen Stellen von Werkstücken aus Superlegierungen
Process for producing deposits on localized areas of superalloy workpieces

(30) Priorité: 14.03.1996 FR 9603202
(43) Date de publication de la demande: 17.09.1997
(73) Titulaire: SNECMA MOTEURS, 75015 Paris (FR)
(72) Inventeur: Clement, Jean-François, 91330 - Yerres (FR); Ferte, Jean-Pierre, 91100 - Corbeil Essonnes (FR)

(56) Documents cités:
- EP-A- 0 279 058
- DE-C- 4 411 680
- FR-A- 2 511 908
- US-A- 4 726 101
- SCHWEISSEN UND SCHNEIDEN, vol. 42, no. 5, 1 Mai 1990, pages 228-231, XP000115178 WIELAGE B ET AL: "HOCHTEMPERATURLOTEN VON X 5 CRNI 18 10 UND NICR 20 TIAL BEI DURCH THERMISCHES SPRITZEN AUFGEBRACHTEN LOTEN"
- WELDING JOURNAL INCLUDING: WELDING RESEARCH, vol. 68, no. 1, Janvier 1989, pages 9S-13S, XP000010013 LUGSCHEIDER E ET AL: "METALLURGICAL ASPECTS OF ADDITIVE-AIDED WIDE-CLEARANCE BRAZING WITH NICKEL-BASED FILLER METALS"

## Description

La présente invention concerne un procédé de réalisation d'un apport sur une zone localisée de pièce en superalliage, notamment destinée à des applications aéronautiques telles que sur moteur d'avion.

Il est connu de rechercher dans de nombreuses applications des propriétés fonctionnelles spécifiques en des zones localisées de pièces telles qu'une résistance améliorée à l'usure ou une tenue améliorée à l'oxydation en fonction de diverses sollicitations ou contacts spécifiques. Divers procédés ont été mis en oeuvre dans ces cas pour assurer l'assemblage d'un élément d'apport sur une pièce. Par exemple, FR-A-2 397 259 prévoit de déposer par fusion grâce à un moyen de soudage une couche d'alliage résistant aux fissurations à l'extrémité d'une aube puis une couche d'un alliage dur et/ou résistant à l'oxydo-corrosion . Les procédés de rechargement par fusion sont toutefois limités par la très faible soudabilité des superalliages à base de nickel ou de cobalt et en particulier à l'état coulé.

FR-A-2 511 908 décrit un procédé d'assemblage par brasage-diffusion permettant de rapporter sur une pièce en superalliage à base de nickel ou de cobalt une pièce élémentaire sous forme d'ébauche pré-frittée obtenue à partir d'un mélange de deux poudres. En fonction de propriétés de surface particulières recherchées dans certaines applications, il n'est toutefois pas possible dans certains cas d'obtenir un matériau fritté autobrasable satisfaisant à partir d'un mélange homogène de poudres.

Selon FR-A-2 691 658, l'élément d'apport est obtenu à partir de la réalisation de trois couches successives par projection à la flamme plasma. Cette solution n'est toutefois applicable que lorsque la surface d'assemblage est plane et elle nécessite l'application d'une pression pour assurer la liaison métallurgique et enfin l'épaisseur du dépôt est limitée à 1 mm.

De manière à répondre de façon satisfaisante à diverses applications sans encourir les inconvénients précédemment relevés des solutions connues antérieures, le présent procédé de réalisation d'un apport sur une zone localisée de pièce en superalliage est caractérisé en ce qu'il comporte les étapes suivantes :
a) réalisation d'un élément d'apport en un matériau métallique déterminé présentant des propriétés fonctionnelles spécifiques adaptées à ladite zone de pièce;
b) dépôt sur au moins une surface dudit élément d'apport d'une couche uniforme obtenue à partir d'un mélange de poudres constitué d'une poudre en superalliage de nickel ou cobalt et d'une poudre en métal d'apport de brasage ;
c) brasage de l'élément d'apport composite revêtu obtenu à l'issue de l'étape b sur la zone localisée de la pièce en superalliage ;
d) usinage en finition de la pièce.

La réalisation de l'élément d'apport à l'étape a du procédé peut être obtenue par usinage, par fonderie à la cire perdue ou par des techniques de métallurgie des poudres.

Le dépôt à l'étape b du procédé peut être obtenu, soit par projection à plasma sous pression partielle du mélange de poudres, soit par frittage à froid, à la presse, du mélange de poudres suivi d'un traitement de densification, soit par la mise en place d'un ruban réalisé à partir du mélange de poudres suivi d'un traitement de densification.

De manière avantageuse, la mise en place de l'élément d'apport sur la zone localisée de la pièce en superalliage est suivie d'une opération de pointage par décharge de condensateur et l'assemblage métallurgique est obtenu soit par traitement thermique au four sous vide, soit par chauffage contrôlé par faisceau d'énergie, en atmosphère contrôlée.

D'autres caractéristiques et avantages de l'invention seront mieux compris à la lecture de la description qui va suivre d'un mode de réalisation de l'invention, en référence aux dessins annexés sur lesquels :
- la figure 1 représente schématiquement un exemple d'élément d'apport suivant l'étape a du procédé conforme à l'invention;
- la figure 2 représente l'élément d'apport de la figure 1 à l'étape b du procédé conforme à l'invention, après la réalisation du dépôt d'une couche uniforme sur une surface ;
- la figure 3 représente l'exemple d'assemblage métallurgique de l'élément d'apport des figures 1 et 2 sur une pièce en superalliage, suivant le procédé conforme à l'invention ;
- la figure 4 représente schématiquement un premier exemple d'application du procédé conforme à l'invention, par apport d'une plaquette sur un talon de plate-forme d'aube de turbine;
- les figures 5, 6, 7, 8 et 9 représentent schématiquement les éléments de l'assemblage représenté sur la figure 4 aux étapes successives du procédé conforme à l'invention ;
- la figure 10 représente une microphotographie d'une coupe transversale d'un élément d'apport revêtu ;
- la figure 11 représente un détail à plus fort grossissement de la microphotographie de la figure 10 ;
- la figure 12 représente une microphotographie d'une coupe de l'assemblage représenté sur la figure 4 ;
- la figure 13 représente schématiquement un deuxième exemple d'application du procédé conforme à l'invention, par apport d'une plaquette à l'extrémité libre d'une aube mobile de turbine ;
- les figures 14, 15, 16, 17 et 18 représentent schématiquement des éléments de l'assemblage représenté sur la figure 13 aux étapes successives du procédé conforme à l'invention.

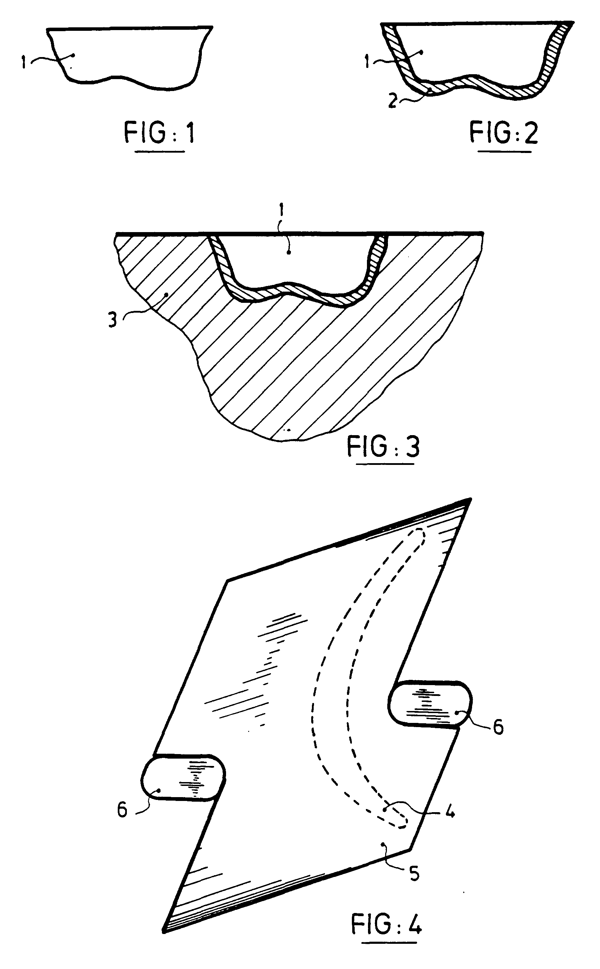

En vue de réaliser un apport sur une zone localisée de pièce en superalliage de nickel ou de cobalt, notamment destinée à des applications aéronautiques telles que sur moteur d'avion le procédé conforme à l'invention comporte les étapes suivantes :
- à l'étape a, un élément d'apport 1 tel que schématiquement représenté sur la figure 1 est réalisé en un matériau métallique déterminé présentant les propriétés fonctionnelles spécifiques recherchées dans l'application. La géométrie de l'élément 1 est définie en fonction de la zone de pièce concernée. L'élément 1 est obtenu par un moyen de fabrication connu en soi et adapté à chaque application, tel que par usinage, par fonderie à la cire perdue ou par des techniques de métallurgie des poudres ;
- à l'étape b, on dépose sur la surface d'assemblage de l'élément 1, comme représenté sur la figure 2, une couche uniforme 2 d'un mélange de poudres d'une épaisseur pouvant varier entre 0,1 et 1 mm suivant l'application. La composition dudit mélange de poudres est décrite par FR-A-2 511 908 et comporte une poudre en alliage de nickel ou de cobalt préalliée et une poudre de métal d'apport de brasage dans des proportions déterminées en fonction de l'application. Le dépôt est effectué par l'un des moyens suivants connus en soi, en fonction des applications :
   . projection à plasma sous pression partielle du mélange de poudres ;
   . frittage à froid, à la presse, du mélange de poudres sur la surface de l'élément 1, suivi d'un traitement thermique au four sous vide permettant d'obtenir une densification du mélange ;
   . mise en place d'un ruban réalisé à partir du mélange de poudres et traitement thermique de densification et frittage.
- à l'étape c, après mise en place de l'élément d'apport revêtu 1 obtenu à l'issue de l'étape b sur la pièce 3, comme représenté sur la figure 3, l'assemblage métallurgique entre l'élément et la pièce 3 est obtenu par brasage. Une fusion partielle du mélange de poudres est obtenue par chauffage en utilisant l'un des moyens connus suivants :
   . traitement thermique au four sous vide ;
   . chauffage contrôlé par faisceau d'énergie, en atmosphère contrôlée tel que par faisceau d'électrons sous vide ou par faisceau laser sous gaz neutre protecteur ;
   On note que lors de la mise en place de l'élément d'apport revêtu 1, la couche 2 permet d'accommoder les tolérances géométriques de la pièce 3 et un simple nettoyage chimique de surface est suffisant sans aucun usinage mécanique préalable.
- à l'étape d finale, un usinage en finition de la pièce est effectué, notamment afin d'obtenir la continuité des surfaces respectives de la pièce 3 et de l'apport 1.

Deux exemples particuliers d'application du procédé conforme à l'invention vont être décrits.

### EXEMPLE 1

La pièce à réaliser est une aube 4 de turbine schématiquement représentée sur la figure 4. L'aube 4 comporte une plate-forme 5 sur le talon de laquelle sont rapportées des plaquettes 6 anti-usure destinées à améliorer la tenue en service des pièces en cas de débattements provenant notamment des vibrations en fonctionnement. L'aube 4 est en superalliage à base de nickel de composition nominale en pourcentages pondéraux : W 12; Co 10, Cr 9; Al 5; Ti 2; Hf 2; Nb 1 et Ni le reste tandis que le matériau retenu et présentant les propriétés recherchées dans cette application pour les plaquettes 6 est un alliage à base de cobalt dont la composition nominale en pourcentages pondéraux est :
. soit Cr 28, W 19,5 Ni 5 et le reste Co
. soit Mo 28, Cr 17,5 Si 3,4 et le reste Co
. soit Cr 24, Ni 10 ; W 7 ; Ta 3,5 ; Co 6 ; Zr O,4 ; Ti 0,2 et le reste Co .

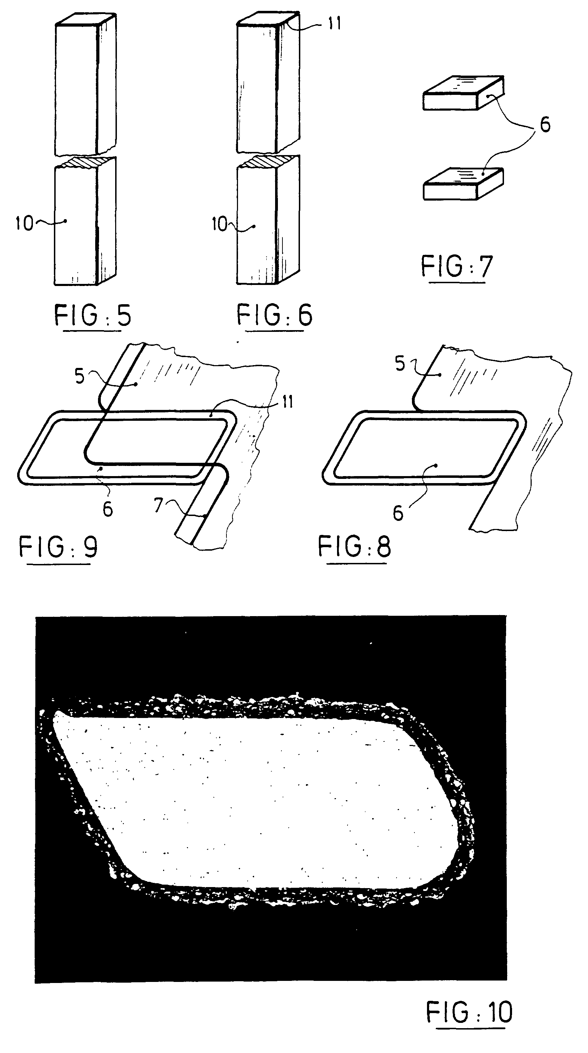

A l'étape a du procédé conforme à l'invention, des tiges 10 représentées sur la figure 5 sont obtenues par usinage de tiges de grande longueur de façon que la section de tige corresponde à la section de la plaquette 6 à obtenir. En variante, les tiges 10 peuvent être obtenues aux cotes de section finie par fonderie à la cire perdue.

A l'étape b suivante du procédé, on dépose par projection à plasma sous pression partielle une couche 11 d'épaisseur uniforme, comprise dans l'exemple de réalisation entre 0,2 et 0,3 mm, d'un mélange de poudres ayant les caractéristiques suivantes :
- granulométrie inférieure à 106 µm,
- composition nominale en pourcentages pondéraux ayant, en fonction de l'alliage retenu pour les plaquettes 6 :
   . soit 80% d'une poudre A à base de Co et Cr 25; Ni 10; W 7,5 et 20% d'une poudre B de brasage dite Ni Cr B 1055 à base de Ni et Cr 15 ; B 3,6 ;
   . soit 70% d'une poudre A à base de Ni et Co 17 ; Cr 15 ; Mo 5; Al 4 ; Ti 3,5 et 30% d'une poudre B de brasage dite Ni Cr Si 1135 à base de Ni et Cr 19, Si 10.

Le résultat est schématisé à la figure 6 et les figures 10 et 11 montrent les microphotographies d'une coupe de la tige 10 comportant la couche 11. Les tiges 10 revêtues sont ensuite découpées par tout moyen connu en soi tel qu'usinage par électro-érosion au fil ou découpe par faisceau laser, de manière à obtenir des plaquettes unitaires 6 telles que représentées sur la figure 7. L'angle du plan de découpe est déterminé en fonction de la conicité de la veine de circulation des gaz dans la turbine de manière que la face de la plaquette 6 située du côté veine après assemblage sur l'aube suive le profil de veine en se raccordant à la face de la plate-forme située du côté veine. Par contre l'épaisseur de la plaquette 6 est déterminée de manière à présenter après assemblage un débord du côté extérieur en-dehors de la veine.

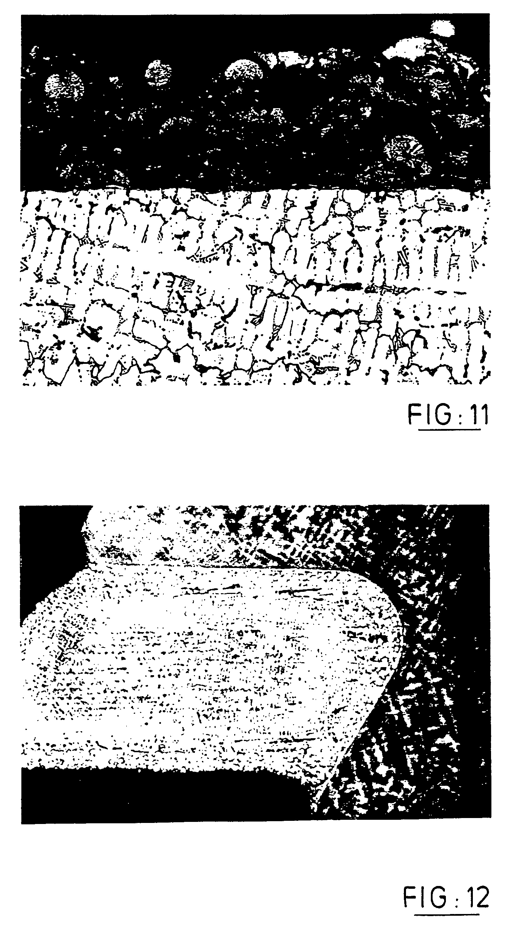

A l'étape c du procédé conforme à l'invention, après mise en place des plaquettes 6 sur les talons de plate-forme 5 d'aube, comme représenté sur la figure 8, un pointage en position est effectué par décharge de condensateur. Les détails de réalisation de cette opération ainsi que le dispositif utilisé sont par exemple décrits par EP-A-0 454 573. Pour une aube obtenue par fonderie à la cire perdue notamment, un simple nettoyage chimique de la surface d'assemblage est suffisant sans aucun usinage mécanique préalable à la mise en place, la couche 11 sur la plaquette 6 permettant d'accommoder les tolérances géométriques du talon de plate-forme 5. Puis une opération de brasage au four sous vide est réalisée dans des conditions déterminées en fonction des matériaux utilisés. Dans le présent exemple, la température se situe entre 1210 et 1240°C et la durée entre 10 et 30 minutes. La figure 12 montre une microphotographie d'une coupe de l'assemblage entre la plaquette 6 et le talon de plate-forme 5 d'aube obtenu après brasage. Une fusion partielle de la couche 11 au cours du traitement thermique a assuré une liaison métallurgique entre la plaquette 6 et l'aube 5.

A l'étape d, une mise aux cotes de pièce finie est obtenue par un usinage en finition de la pièce, comme schématiquement représenté sur la figure 9, le contour final étant indiqué en 7.

### EXEMPLE 2

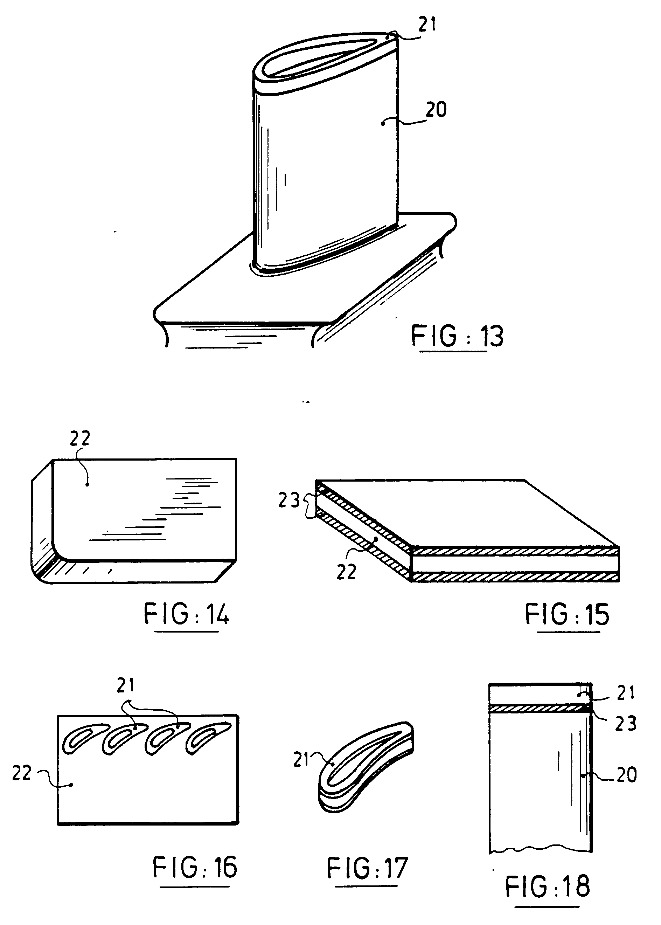

La pièce à réaliser est une aube mobile 20 de turbine schématiquement représentée sur la figure 13. L'extrémité libre de l'aube 20 porte une plaquette 21 rapportée au sommet de l'aube. L'aube 20 est en superalliage à base de nickel obtenue par fonderie monocristalline et de composition nominale en pourcentages pondéraux : Ta 8; Cr 7,5; Co 6,5; W 5,5; Al 5,3; Mo 2; Ti 1,2 et le reste Ni,
tandis que le matériau retenu pour l'élément d'apport constitué par les plaquettes 21 en vue d'assurer des propriétés de résistance à l'oxydation présente la composition nominale en pourcentages pondéraux :
Co 23, Cr 19, Al 8,5, Ta 4, Y 0,6 et Ni le reste

A l'étape a du procédé conforme à l'invention, des plaques 22 représentées sur la figure 14 dans le matériau retenu défini ci-dessus sont réalisées par fonderie à la cire perdue. Une surépaisseur de finition est prévue par rapport à la cote finale prévue sur pièce. A l'étape b suivante du procédé, on dépose par projection à plasma sous pression partielle sur les deux faces de la plaque 22 une couche 23 d'épaisseur uniforme, comprise dans l'exemple de réalisation entre 0,1 et 0,2 mm, d'un mélange de poudres ayant les caractéristiques suivantes :
- granulométrie inférieure à 106 µm,
- composition nominale en pourcentages pondéraux :
   80% d'une poudre A à base de nickel et comportant
      . soit Cr 22, Al 8, Ta 5, Y 0,6
      . soit Co 17; Cr 15; Mo 5; Al 4; Ti 3,5 et le reste Ni
   et 20% d'une poudre B de brasage dite NiCoSiB 1060 à base de Ni et Co 20, Si 4,5, B 3.

Le résultat est schématisé sur la figure 15 montrant les couches 23 déposées sur la plaque 22.

En variante, ledit mélange de poudres est mis en place sous forme de ruban aggloméré sur une face de la plaque 22, puis soumis à un traitement thermique de densification effectué à une température comprise entre 1150 et 1170°C pendant quinze minutes .

Les plaques 22 revêtues sont ensuite découpées par tout moyen connu en soi tel qu'usinage par électro-érosion au fil ou découpe au laser de plaquettes unitaires 21, comme schématisé sur la figure 16 et telle que représentée sur la figure 17, suivant la forme géométrique du sommet correspondant de l'aube 20.

A l'étape c du procédé conforme à l'invention, après mise en place des plaquettes 21 sur les sommets des aubes 5, comme représenté sur la figure 18, un pointage en position est effectué par décharge de condensateur. Puis une opération de brasage au four sous vide est réalisée, dans le présent exemple, à une température de 1200°C pendant 15 à 30 minutes, de manière à obtenir une fusion du mélange de poudre et à assurer l'assemblage métallurgique de la plaquette 21 et de l'aube 20.

En variante, la fusion du mélange de poudre de la couche 23 de la plaquette 21 est obtenue par chauffage contrôlé par faisceau d'énergie de la face extérieure de la plaquette 21, tel que par faisceau d'électrons ou par faisceau laser, cette opération étant effectuée sous atmosphère contrôlée.

A l'étape d, un usinage en finition de l'aube 20 est effectué, notamment par reprise en extrémité assurant la mise à hauteur.

## Revendications

1. Procédé de réalisation d'un apport sur une zone localisée de pièce (3;5;20) en superalliage **caractérisé en ce qu'**il comporte les étapes suivantes :
a) réalisation d'un élément d'apport (1;6;21) en un matériau métallique déterminé présentant des propriétés fonctionnelles spécifiques adaptées à ladite zone de pièce ;
b) dépôt sur au moins une surface dudit élément d'apport (1;6;21) d'une couche (2;11;23) uniforme obtenue à partir d'un mélange de poudre constitué d'une poudre en superalliage de nickel ou cobalt et d'une poudre en métal d'apport de brasage;
c) brasage de l'élément d'apport (1;6;21) composite revêtu obtenu à l'issue de l'étape b sur la zone localisée de la pièce (3;5;20) en superalliage
d) usinage en finition de la pièce (3;5;20).

2. Procédé de réalisation d'un apport sur une pièce en superalliage selon la revendication 1 dans lequel à l'étape a, l'élément d'apport (6) est obtenu par usinage de tiges (10) dont la section présente la forme de l'élément d'apport (6) recherché.

3. Procédé de réalisation d'un apport sur une pièce en superalliage selon la revendication 1 dans lequel à l'étape a, l'élément d'apport (6) est obtenu à partir de tiges (10) dont la section présente la forme de l'élément d'apport (6) recherché et qui sont obtenus par fonderie à la cire perdue.

4. Procédé de réalisation d'un apport sur une pièce en superalliage selon la revendication 1 dans lequel à l'étape a, l'élément d'apport (6) est obtenu à partir de tiges (10) dont la section présente la forme de l'élément d'apport (6) recherché et qui sont obtenues par des techniques de métallurgie des poudres.

5. Procédé de réalisation d'un apport sur une pièce en superalliage selon la revendication 1 dans lequel à l'étape a, l'élément d'apport (21) est obtenu à partir de plaques (22) réalisées par fonderie à la cire perdue.

6. Procédé de réalisation d'un apport sur une pièce en superalliage selon l'une quelconque des revendications 1 à 5 dans lequel à l'étape b, ledit dépôt est effectué par projection à plasma sous pression partielle du mélange de poudres.

7. Procédé de réalisation d'un apport sur une pièce en superalliage selon l'une quelconque des revendications 1 à 5 dans lequel à l'étape b, ledit dépôt est obtenu par frittage à froid, à la presse, du mélange de poudres autour de l'élément d'apport suivi d'un traitement thermique de densification au four sous vide.

8. Procédé de réalisation d'un apport sur une pièce en superalliage selon l'une quelconque des revendications 1 à 5 dans lequel à l'étape b, ledit dépôt est obtenu par la mise en place d'un ruban réalisé à partir du mélange de poudres par un traitement thermique de densification et frittage.

9. Procédé de réalisation d'un apport sur une pièce en superalliage selon l'une quelconque des revendications 1 à 8 dans lequel après l'étape b, on effectue une découpe de l'élément d'apport (6;21) aux dimensions géométriques de la zone localisée de pièce correspondante, par tout moyen d'usinage connu tel que découpe au fil par électro-érosion ou découpe au laser.

10. Procédé de réalisation d'un apport sur une pièce en superalliage selon l'une quelconque des revendications 1 à 9 dans lequel à l'étape c, la mise en place de l'élément d'apport (6;21) sur la zone localisée de la pièce (5;20) en superalliage est suivie d'une opération de pointage par décharge de condensateur.

11. Procédé de réalisation d'un apport sur une pièce en superalliage selon la revendication 10 dans lequel après l'opération de pointage, le brasage assurant l'assemblage métallurgique entre l'élément d'apport (6;21) et la pièce (5;20) est effectué par traitement thermique au four sous vide.

12. Procédé de réalisation d'un apport sur une pièce en superalliage selon la revendication 10 dans lequel après l'opération de pointage, le brasage assurant l'assemblage métallurgique entre l'élément d'apport (6;21) et la pièce (5;20) est effectué par chauffage contrôlé par faisceau d'énergie, en atmosphère contrôlée.

13. Procédé de réalisation d'un apport sur une pièce selon l'une quelconque des revendications 1 à 12 dans lequel la pièce (3 ; 5 ; 20) est obtenue par fonderie à la cire perdue et à l'étape C le brasage de l'élément d'apport (1 ; 6 ; 21) composite revêtu est effectué sur ladite zone localisée de la pièce (3 ; 5 ; 20) à l'état brut de fonderie après nettoyage chimique de la surface.

## Patentansprüche

1. Verfahren zur Herstellung einer Ablagerung auf einem bestimmten Bereich von Werkstücken (3; 5; 20) aus Superlegierung,
**dadurch gekennzeichnet,**
**dass** es aus folgenden Verfahrensschritten besteht:
a) Herstellung eines Ablagerungselements (1; 6; 21) aus einem bestimmten Metallwerkstoff, der die für den genannten Werkstückbereich geeigneten spezifischen funktionellen Eigenschaften aufweist,
b) Aufbringen einer gleichmäßigen Schicht (2; 11; 23) auf mindestens einer Oberfläche dieses Ablagerungselements (1; 6; 21), wobei diese Schicht aus einem Pulvergemisch hergestellt wird, das aus einem Nickel- oder Kobalt-Superlegierungspulver und einem Lötablagerungsmetallpulver besteht,
c) Löten des in Verfahrensschritt b hergestellten, beschichteten Verbund-Ablagerungselements (1; 6; 21) auf den bestimmten Bereich des Werkstücks (3; 5; 20) aus Superlegierung,
d) Endbearbeitung des Werkstücks (3; 5; 20).

2. Verfahren zur Herstellung einer Ablagerung auf einem Werkstück aus Superlegierung nach Anspruch 1, wobei in Verfahrensschritt a das Ablagerungselement (6) durch Bearbeitung von Stangen (10) hergestellt wird, deren Querschnitt die Form des gewünschten Ablagerungselements (6) aufweist.

3. Verfahren zur Herstellung einer Ablagerung auf einem Werkstück aus Superlegierung nach Anspruch 1, wobei in Verfahrensschritt a das Ablagerungselement (6) aus Stangen (10) hergestellt wird, deren Querschnitt die Form des gewünschten Ablagerungselements (6) aufweist, und die durch das Wachsausschmelzverfahren hergestellt werden.

4. Verfahren zur Herstellung einer Ablagerung auf einem Werkstück aus Superlegierung nach Anspruch 1, wobei in Verfahrensschritt a das Ablagerungselement (6) aus Stangen (10) hergestellt wird, deren Querschnitt die Form des gewünschten Ablagerungselements (6) aufweist, und die durch Techniken der Pulvermetallurgie hergestellt werden.

5. Verfahren zur Herstellung einer Ablagerung auf einem Werkstück aus Superlegierung nach Anspruch 1, wobei in Verfahrensschritt a das Ablagerungselement (21) aus Platten (22) hergestellt wird, die durch das Wachsausschmelzverfahren hergestellt werden.

6. Verfahren zur Herstellung einer Ablagerung auf einem Werkstück aus Superlegierung nach einem der Ansprüche 1 bis 5, wobei in Verfahrensschritt b die Schicht durch Plasmaspritzen des Pulvergemischs unter Teildruck aufgebracht wird.

7. Verfahren zur Herstellung einer Ablagerung auf einem Werkstück aus Superlegierung nach einem der Ansprüche 1 bis 5, wobei in Verfahrensschritt b die genannte Schicht durch Kaltsintern des Pulvergemischs um das Ablagerungselement herum in der Presse aufgebracht wird, gefolgt von einer Warmverdichtung unter Vakuum im Ofen.

8. Verfahren zur Herstellung einer Ablagerung auf einem Werkstück aus Superlegierung nach einem der Ansprüche 1 bis 5, wobei in Verfahrensschritt b die genannte Schicht durch Anbringen eines Bandes aufgebracht wird, das aus einem Pulvergemisch durch Warmverdichtung und Sinterung hergestellt wird.

9. Verfahren zur Herstellung einer Ablagerung auf einem Werkstück aus Superlegierung nach einem der Ansprüche 1 bis 8, wobei nach dem Verfahrensschritt b ein Zuschneiden des Ablagerungselements (6; 21) mit den geometrischen Abmessungen des entsprechenden bestimmten Bereichs des Werkstücks erfolgt, und zwar durch ein beliebiges bekanntes Bearbeitungsmittel wie z. B. Funkenerosionsschneiden oder Laserschneiden.

10. Verfahren zur Herstellung einer Ablagerung auf einem Werkstück aus Superlegierung nach einem der Ansprüche 1 bis 9, wobei in Verfahrensschritt c nach der Anbringung des Ablagerungselements (6; 21) auf dem bestimmten Bereich des Werkstücks (5; 20) aus Superlegierung ein Vorgang des Heftschweißens durch Kondensatorentladung erfolgt.

11. Verfahren zur Herstellung einer Ablagerung auf einem Werkstück aus Superlegierung nach Anspruch 10, wobei nach dem Vorgang des Heftschweißens das Löten, das die metallurgische Verbindung zwischen dem Ablagerungselement (6; 21) und dem Werkstück (5; 20) gewährleistet, durch Wärmebehandlung unter Vakuum im Ofen erfolgt.

12. Verfahren zur Herstellung einer Ablagerung auf einem Werkstück aus Superlegierung nach Anspruch 10, wobei nach dem Vorgang des Heftschweißens das Löten, das die metallurgische Verbindung zwischen dem Ablagerungselement (6; 21) und dem Werkstück (5; 20) gewährleistet, durch gesteuertes Erhitzen mittels Energiestrahl in gesteuerter Atmosphäre erfolgt.

13. Verfahren zur Herstellung einer Ablagerung auf einem Werkstück aus Superlegierung nach einem der Ansprüche 1 bis 12, wobei das Werkstück (3; 5; 20) durch Wachsausschmelzverfahren hergestellt wird und in Verfahrensschritt c das Löten des beschichteten Verbund-Ablagerungselements (1; 6; 21) auf dem genannten bestimmten Bereich des Werkstücks (3; 5; 20) im gießtechnischen Rohzustand nach einer chemischen Reinigung der Oberfläche erfolgt.

## Claims

1. Process for producing an add-on on a localized region of a component (3; 5; 20) made of a superalloy, **characterized in that** it comprises the following steps:
a) production of an add-on element (1; 6; 21) made of a defined metallic material having specific functional properties tailored to the said region of the component;
b) deposition on at least one surface of the said add-on element (1; 6; 21) of a uniform layer (2; 11; 23) obtained from a powder blend consisting of a nickel or cobalt superalloy powder and a brazing filler metal powder;
c) brazing of the coated composite add-on element (1; 6; 21) obtained after step b) onto the localized region of the superalloy component (3; 5; 20);
d) finish machining of the component (3; 5; 20).

2. Process for producing an add-on on a superalloy component according to Claim 1, in which, in step a), the add-on element (6) is obtained by the machining of rods (10) whose cross section has the shape of the desired add-on element (6).

3. Process for producing an add-on on a superalloy component according to Claim 1, in which, in step a), the add-on element (6) is obtained from rods (10) whose cross section has the shape of the desired add-on element (6), the said rods being obtained by lost wax casting.

4. Process for producing an add-on on a superalloy component according to Claim 1, in which, in step a), the add-on element (6) is obtained from rods (10) whose cross section has the shape of the desired add-on element (6), the said rods being obtained by powder metallurgy techniques.

5. Process for producing an add-on on a superalloy component according to Claim 1, in which, in step a), the add-on element (21) is obtained from plates (22) produced by lost wax casting.

6. Process for producing an add-on on a superalloy component according to any one of Claims 1 to 5, in which, in step b), the said deposition is carried out by partial-pressure plasma spraying of the powder blend.

7. Process for producing an add-on on a superalloy component according to any one of Claims 1 to 5, in which, in step b), the said deposited layer is obtained by cold pressure sintering of the powder blend around the add-on element followed by a densification heat treatment in a vacuum furnace.

8. Process for producing an add-on on a superalloy component according to any one of Claims 1 to 5, in which, in step b), the said deposited layer is obtained by putting into place a tape made from the powder blend by a densification heat treatment and sintering.

9. Process for producing an add-on on a superalloy component according to any one of Claims 1 to 8, in which, after step b), the add-on element (6; 21) is cut to the geometrical dimensions of the corresponding localized region of the component by any known machining means, such as wire electrical discharge machining or laser cutting.

10. Process for producing an add-on on a superalloy component according to any one of Claims 1 to 9, in which, in step c), after the add-on element (6; 21) has been put into place on the localized region of the superalloy component (5; 20), a capacitor-discharge tack welding operation is carried out.

11. Process for producing an add-on on a superalloy component according to Claim 10, in which, after the tack welding operation, the brazing providing the metallurgical joint between the add-on element (6; 21) and the component (5; 20), is carried out by heat treatment in a vacuum furnace.

12. Process for producing an add-on on a superalloy component according to Claim 10, in which, after the tack welding operation, the brazing, providing the metallurgical joint between the add-on element (6; 21) and the component (5; 20), is carried out by controlled heating using a high-energy beam in a controlled atmosphere.

13. Process for producing an add-on on a component according to any one of Claims 1 to 12, in which the component (3; 5; 20) is obtained by lost wax casting and in step c) the coated composite add-on element (1; 6; 21) is brazed onto the said localized region of the component (3; 5; 20) in the as-cast state after the surface has been chemically cleaned.
